# EUROPEAN PATENT APPLICATION

(11) **EP 4 552 761 A1**
(43) Date of publication of application: **14.05.2025**
(21) Application number: 24209516.4
(22) Date of filing: 29.10.2024
(51) Int. Cl.: B09B 3/30

(54) **A PROCESS FOR TREATING BOTTOM ASH OR SLAG IN GENERAL**

(30) Priority: 07.11.2023 IT 202300023400
(71) Applicant: Waste Treatment Company S.r.l., 35127 Padova (IT)
(72) Inventor: BOSCHI, Giorgio, 35127 Padova (IT)
(74) Representative: Braidotti, Andrea

(57) **Abstract**

Treatment process for bottom ash or slag in general characterised by the fact that it includes the following phases:
- removal of ferrous material content between 7% and 10% and non-ferrous content between 2% and 3% of the slag,
- removal by sieving of the fraction > 12-15 mm,
- sending the fraction < 12-15 mm with water in a slag/water ratio between 1:1 and 1:3, inside a drum mixer (2) where washing/carbonation takes place,
- injection of CO2 into the drum (in a concentration close to 100% vol/vol) at a flow rate of approximately 0.2-0.5 litres/minute per kilo of slag,
- introduction of FeSO_{4*} 7H₂O (ferrous sulphate heptahydrate) into the drum,
- mixing for about 10-15 minutes under continuous pH control to promote the completion of the reactions involved: reduction of Hexavalent Chromium, precipitation of Heavy Metals and solubilization of Salts,
- sending the washed and carbonated slag with the washing water to a rotating sieve (8) with holes of 2-4 mm diameter,
- sending the fraction above 2-4 mm to a further washing apparatus (10) and separation of the liquid from the washed fraction > 2-4 mm,
- sending the solid phase > 2-4 mm to a collection container (12) and the liquid to a water reuse circuit (14),
- sending the under-sieve (< 2-4 mm) exiting the sieve (8) to a second separating sieve (16) with 0.3-0.5 mm holes,
- sending of the solid fraction > 0.3-0.5 mm and of the soaking water to a washing and separation group (18) with collection of the solid with granulometry > 0.3-0.5 mm in a collection container (20) and sending the liquid to the water reuse circuit (14),
- sending the fraction <0.3-0.5 mm exiting the sieve (16) to a vacuum filtration system (22) to obtain a fraction < 0.3-0.5 mm which is sent to a washing unit (24) from which the solid fraction - sent to the collection container (26) - is separated from the liquid sent to the water reuse circuit (14),
- sending the filtration liquid exiting the filter (22) to a chemical-physical purifier (28), the chemical-physical purifier having two possible outputs: water to the drain and purification sludge.

## Description

The present invention concerns a process for treating bottom ash or slag in general.

The bottom ash (slag) resulting from the combustion of municipal waste, which represents between 15 and 20% by weight of the total incinerated municipal waste, is characterised by a high pH (most frequent values between 12 and 12.8), a high concentration of Calcium (most frequent values between 15% and 25% by weight as Ca or values between 21 and 35% by weight if expressed as Calcium Oxide.

The waste also contains high concentrations of: dangerous heavy metals (e.g. lead, chromium, copper, zinc, nickel); salts (chlorides, sulphates, etc.); unburned organic substances (OTC).

The waste release tests are out of limits due to high pH, presence of soluble salts (chlorides), COT and heavy metals, such as lead, chromium, nickel, copper, etc.

Out-of-limit release tests and in particular the presence of chlorides in concentrations higher than 1000 mg/kg compromise the possibility of reuse as artificial aggregates.

Since slag has a great recovery potential, water washing plants are increasingly being used to lower the chloride and TOC content below the acceptable limits for reuse.

In some European countries, to overcome the high pH, the waste is stored in large piles for periods ranging from 3 to 6 months in the air to promote the "natural" carbonation from calcium oxides to calcium carbonates due to the presence of CO₂ in the air. This is what is called "ageing " of the waste. The pH, after a few months, drops to values between 9 and 10 but in a nonhomogeneous way in the mass of waste.

The two distinct processes mentioned above (washing with water and carbonation) require the construction of complex plants and the use of extremely large surfaces for long periods of time. Furthermore, natural carbonation occurs in a non-uniform manner within the slag storage piles because the slag on the surface of the pile carbonates more rapidly and forms a layer of Calcium Carbonate on the surface that prevents the entry of CO₂ into the pile.

EP 2732887 concerns a process for the treatment of bottom ash or slag in general, characterised by the mixing, inside a rotating body, of the bottom ash and/or slag and a quantity of water in a weight ratio between 0.8 and 2, while simultaneously a flow of gaseous CO2 in a concentration between 90 and 100% v/v passes through the rotating body for a period not exceeding 2 hours.

US2003183137 covers a process for treating incineration residues from waste incineration plants, in which the incineration material is incinerated on a furnace grate. The incineration residues produced are cooled in a wet slag remover and transported out of the wet slag remover.

The aim of the invention is to perform the washing and carbonation of the slag in a single stage, in extremely short times (less than 1.5 hours) and with an extremely compact device. Optimal results are guaranteed by the continuous control of the pH and the flow of CO₂.

This aim is achieved according to the invention with a process for treating bottom ash or slag as described in claim 1.

The present invention is further clarified hereinafter in a practical embodiment thereof with reference to the attached table of drawings depicting the process according to the invention.

The process, according to the invention, initially provides that the high content of ferrous (7-10%) and non-ferrous (2-3%) material of the slag is removed before washing/carbonation with known techniques of deferrization and separation of non-ferrous metals. The fraction > 12-15 mm (preferably 12 mm) consisting of ceramic pieces, inert materials, stones (about 15%) is also removed using dry screens with 12-15 mm holes. The fraction < 12-15 mm together with the water (slag/water ratio between 1:1 and 1:3, most suitable value 1:1.6) is loaded inside a drum mixer 2 where washing/carbonation takes place.

The drum 2 is equipped with a mixing system provided inside it with a rotating shaft 4 with ploughshare, inclined blade and/or paddle tools. In a variant embodiment, not shown in the drawings, the process can be carried out using a rotating drum.

CO₂ (in a concentration close to 100% vol / vol) is also introduced into drum 2 at a flow rate of approximately 0.2-0.5 litres/minute per kilo of slag.

Working in the aqueous phase, CO₂, which is soluble in water, can easily reach the basic substances with which to react. CO2 in water forms Carbonic Acid (H ₂ CO ₃ ) which can react with the basic compounds present in the slag.

For example, the calcium oxide, CaO, present in the slag, in water is in the form of calcium hydrate, Ca(OH)₂ which reacts with carbonic acid, H₂CO₃, according to the acid-base reaction:

Ca(OH)₂ + H₂CO₃ →CaCO₃ + 2H₂O

The tipping and mixing action of drum 2 promotes and speeds up carbonation, causes partial grinding of the slag, and prevents the calcium carbonate that forms on the surface of the solid from impeding the penetration of CO₂ throughout the solid mass.

It should be noted that, while current washing systems with only water only solubilize soluble chlorides, washing with carbonated water, implemented in our process, also favors the solubilization of the so-called insoluble chlorides (Friedel salts) and therefore their removal from the washing water. In this way, the quality of the artificial aggregate that will be produced at the end of the process is improved as it has a lower content of chlorides (both soluble and insoluble).

After approximately 20-30 minutes of CO₂ dosing (the time may vary depending on the flow of CO₂ introduced) the pH of the mixture (water + waste) drops to a value of around 7 (between 6.5 and 7.5).

At this point 2FeSO_{4*}7H₂O (Ferrous Sulphate Heptahydrate) is added inside the drum and following this addition the Iron 2⁺ (ferrous ion) reduces the Hexavalent Chromium to Trivalent Chromium.

The total dosage of CO₂ can vary in relation to the pH (or rather the alkaline reserve) of the slag from 10 litres to 20 litres of CO₂ per kilo of slag.

After dosing the Ferrous Sulphate, continue mixing for another 10-15 minutes under continuous pH control to encourage the completion of the reactions involved: reduction of Hexavalent Chromium, precipitation of heavy metals and solubilization of salts.

In order to avoid the consumption of mains or groundwater, the water used for washing/carbonation does not necessarily have to be mains or well water. Water polluted by metals and salts can also be used, for example BUFFER TANK water (technological water). These waters, characterised by high pH (above 12), Chloride concentrations above 6 g/l, Lead in the order of 11 mg/l and COD > 6000 mg/l, have high treatment costs. Their use in the carbonation of slag avoids the use of ground or mains water and allows significant economic and environmental savings.

Once the reaction is complete in drum 2, the mixture, containing the washed and carbonated slag and the washing water, is sent to a rotating sieve 8 with holes of 2-4 mm diameter (preferably 2 mm). The fraction above the sieve is sent to an apparatus 10 for further washing and separation, using known techniques, of the liquid from the washed solid. The solid is then collected in a collection container 12 while the liquid enters a water reuse circuit 14. The under-sieve (i.e. the washing/carbonation liquid with the solid fraction < 2-4 mm) exiting from sieve 8 passes into a second separating sieve 16 with holes of 0.3-0.5 (preferably 0.5 mm). The solid fraction above the sieve and its imbibition water then pass to a washing unit 18 for separation, using known techniques, of the liquid from the washed over-sieve solid. The washed solid is collected in collection container 20 and the liquid enters the water reuse circuit 14.

The undersieve (i.e. the washing/carbonation liquid with the solid fraction < 0.3-0.5 mm) exiting the sieve 16 goes to a vacuum filtration plant 22 to obtain a solid fraction from 0 to 0.3-0.5 mm which is washed with known techniques in a washing group 24 and separated, with known techniques, 24. The washed solid part is sent to a collection container 26, the liquid enters the water reuse circuit 14. The liquid (i.e. the washing/carbonation water from which the various solid fractions have been separated) exiting the filtration plant 22 goes to a chemical-physical purifier 28. The chemical-physical purifier has two possible outlets: water to the drain and purification sludge.

The products from the washing/carbonation process described above will therefore be:
- coarse slag fraction (from 2-4 mm to 12-15 mm) for recovery as artificial aggregate,
- medium slag fraction (from 0.3-0.5 mm to 2-4 mm) to be recovered as artificial aggregate,
- fine slag fraction (< 0.3-0.5 mm) to be recovered as artificial aggregate.

The fractions of washed and carbonated slag fall within the limits set for the recovery of materials in the release test and are therefore suitable for use as artificial aggregates for: mortar (UNI EN 13319); concrete (UNI EN 12620); for bituminous mixtures and surface treatments for roads, airports and other areas subject to traffic (UNI EN 13043) and aggregates for unbound and hydraulically bound materials for use in civil engineering works and road construction (UNI EN 13242).

From what has been said it is clear that the process according to the invention presents numerous advantages among which:
- following the acid-base reaction in water between CO2 and Hydroxides/Oxides, the pH drops to values between 8.5 and 10.5 up to a value of 11.0. As a result, the waste loses its hazardous characteristics as it is no longer corrosive and irritating;
- carbonation transforms part of the oxides into carbonates;
- pollutants and soluble salts are removed with water;
- carbonation and washing drastically reduce the release of heavy metals and anions;
- the slag is no longer eco-toxic as it is free of metals and soluble salts.
- the carbonation of waste involves an irreversible reaction between CO₂ and oxides (CO₂ sink ) as it is transformed into carbonates (e.g. CaCOs).

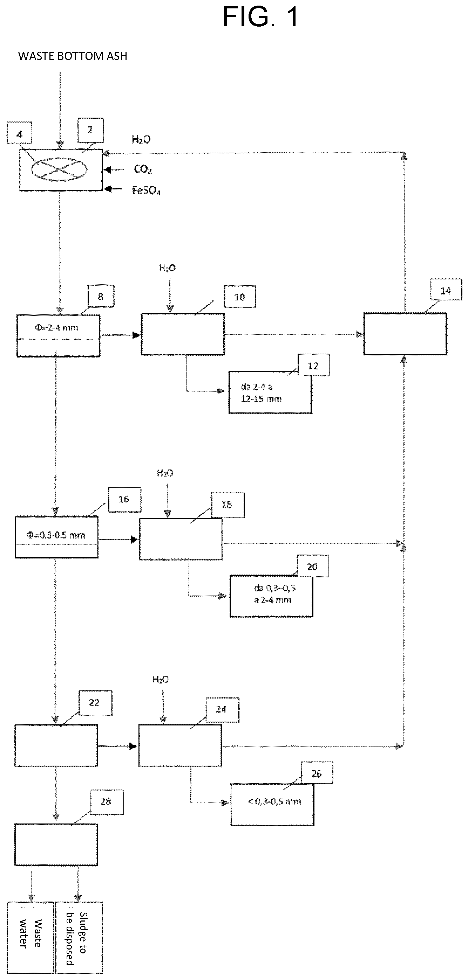

## Claims

1. Treatment process for bottom ash or slag in general **characterised by** the fact that it includes the following phases:
- removal of ferrous material content between 7% and 10% and non-ferrous content between 2% and 3% of the slag,
- removal by sieving of the fraction > 12-15 mm,
- sending the fraction < 12-15 mm with water in a slag/water ratio between 1:1 and 1:3, inside a drum mixer (2) where washing/carbonation takes place,
- injection of CO2 into the drum (in a concentration close to 100% vol/vol) at a flow rate of approximately 0.2-0.5 litres/minute per kilo of slag,
- introduction of FeSO_{4*} 7H₂O (ferrous sulphate heptahydrate) into the drum,
- mixing for about 10-15 minutes under continuous pH control to promote the completion of the reactions involved: reduction of Hexavalent Chromium, precipitation of Heavy Metals and solubilization of Salts,
- sending the washed and carbonated slag with the washing water to a rotating sieve (8) with holes of 2-4 mm diameter,
- sending the fraction above 2-4 mm to a further washing apparatus (10) and separation of the liquid from the washed fraction > 2-4 mm,
- sending the solid phase > 2-4 mm to a collection container (12) and the liquid to a water reuse circuit (14),
- sending the under-sieve (< 2-4 mm) exiting the sieve (8) to a second separating sieve (16) with 0.3-0.5 mm holes,
- sending of the solid fraction > 0.3-0.5 mm and of the soaking water to a washing and separation group (18) with collection of the solid with granulometry > 0.3-0.5 mm in a collection container (20) and sending the liquid to the water reuse circuit (14),
- sending the fraction <0.3-0.5 mm exiting the sieve (16) to a vacuum filtration system (22) to obtain a fraction < 0.3-0.5 mm which is sent to a washing unit (24) from which the solid fraction - sent to the collection container (26)
- is separated from the liquid sent to the water reuse circuit (14),
- sending the filtration liquid exiting the filter (22) to a chemical-physical purifier (28), the chemical-physical purifier having two possible outputs:
water to the drain and purification sludge.
